# EUROPEAN PATENT APPLICATION

(11) **EP 4 702 833 A1**
(43) Date of publication of application: **04.03.2026**
(21) Application number: 25199599.9
(22) Date of filing: 02.09.2025
(51) Int. Cl.: A01G 3/02, A01G 3/047, A01G 3/06, B26B 13/16

(54) **SPRING CLIP**

(30) Priority: 03.09.2024 GB 202412900
(71) Applicant: Westland Horticulture Limited, Dungannon Tyrone BT70 1NJ (GB)
(72) Inventor: McARDLE, Simon John, Dungannon, BT70 1NJ (GB); BARNARD, Tim, Dungannon, BT70 1NJ (GB)
(74) Representative: Murgitroyd & Company

(57) **Abstract**

A cutting tool 1 comprises a first shear part 2, a second shear part 3 rotatably connected to the first shear part 2 and a retaining means 10 movably connected to the first shear part 2. The cutting tool has a storage configuration in which the retaining means 10 engages the second shear part 3. The retaining means 10 is biased towards an open position in which the retaining means 10 does not engage the second shear part 2.

## Description

The invention relates to cutting tools, such as garden cutting tools.

### Background

Cutting tools such as shears, secateurs and the like typically comprise a first shear part and a second shear part, at least one of the shear parts having a cutting blade and both shear parts having a shaft, lever arm or handle which are arranged at opposite sides of a pivot. The pivot connects the first and second shear parts to each other in a rotatable manner, allowing the blades and handles to be opened and closed in use.

The cutting blades of cutting tools such as secateurs and the like can present a safety hazard during storage. Where the first and second shear parts can freely rotate with respect to one another, it is possible that the cutting tool will be stored in a position where the sharp cutting blades are exposed, presenting a significant hazard to nearby persons. While it is possible to wrap e.g. one or more bands around the cutting tool to ensure that the blades remain in a closed position during storage, such solutions can be difficult and cumbersome to remove before use. There exists a need to address such problems of the prior art.

### Summary of the invention

According to a first aspect of the invention there is provided a cutting tool comprising: a first shear part; a second shear part rotatably connected to the first shear part; and a retaining means movably connected to the first shear part, wherein at least one of the first shear part and the second shear part comprises a blade, wherein the cutting tool has a storage configuration in which the retaining means engages the second shear part, and wherein the retaining means is biased towards an open position in which the retaining means does not engage the second shear part. Advantageously, the retaining means can be used to engage the second shear part so that the cutting tool can be stored safely.

According to another aspect of the invention there is provided a cutting tool comprising: a first shear part; a second shear part rotatably connected to the first shear part; and a retaining means movably connected to the first shear part, and wherein the retaining means is biased towards an open position. Advantageously, the retaining means is biased towards a position in which it does not interrupt operation of the cutting tool.

According to another aspect of the invention there is provided a retaining means for a cutting tool, the retaining means comprising an L-shaped first leg, a J-shaped second leg and a bridge portion, wherein the first leg is connected to the second leg via the bridge portion and wherein the retaining means is a resilient retaining means. Advantageously, the retaining means can be attached or retrofitted to a suitable cutting tool.

Optionally each of the first and second shear parts comprises a handle.

Optionally the cutting tool comprises a spring means.

Optionally the spring means comprises a coiled spring or a leaf spring.

Optionally the cutting tool comprises a spring means locatable between the first shear part and the second shear part.

Optionally the spring means is configured for separating the handles of the first shear part and the second shear part.

Optionally the spring means is configured for pushing a part of the second shear part towards the retaining means.

Optionally the spring means is configured for pushing a part of the second shear part towards the bridge portion of the retaining means.

Optionally the spring means is configured for pushing a part of the second shear part towards the bridge portion of the retaining means when the retaining means is in a closed position.

Optionally the spring means is configured for pushing a part of the second shear part towards the bridge portion of the retaining means when the cutting tool is in the storage configuration.

Optionally the spring means is attached to the first shear part and the second shear part.

Optionally the retaining means is rotatably connected to the first shear part.

Optionally the retaining means is rotatably connected to the handle of the first shear part.

Optionally the first shear part comprises a connection means.

Optionally the first shear part comprises a connection means for connecting the retaining means to the first shear part.

Optionally the connection means comprises a hole or aperture for receiving at least a part of the retaining means.

Optionally the retaining means is movable between an open position and a closed position.

Optionally the retaining means is rotatable between an open position and a closed position.

Optionally the first shear part comprises a stopper.

Optionally in the open position the retaining means engages a stopper of the first shear part.

Optionally the stopper of the first shear part is attached or adjacent to the connection means or handle of the first shear part.

Optionally the stopper of the first shear part is integrally formed with the connection means.

Optionally the stopper of the first shear part comprises an engagement surface for engaging at least a part of the retaining means.

Optionally the stopper of the first shear part limits the movement of the retaining means with respect to the first shear part.

Optionally the second shear part comprises a stopper.

Optionally in the closed position the retaining means engages a stopper of the second shear part.

Optionally the stopper of the second shear part limits the movement of the retaining means with respect to the second shear part.

Optionally the stopper of the second shear part prevents movement of the retaining means away from the second shear part.

Optionally the stopper of the second shear part is attached to the handle of the second shear part.

Optionally the stopper of the second shear part is integrally formed with the handle of the second shear part.

Optionally the stopper of the second shear part comprises an engagement surface.

Optionally the stopper of the second shear part comprises an engagement surface for engaging at least a part of the retaining means.

Optionally the stopper of the second shear part comprises an engagement surface for engaging the bridge portion of the retaining means.

Optionally the retaining means is curved.

Optionally the retaining means comprises an open loop.

Optionally the retaining means comprises a first leg

Optionally the retaining means comprises a second leg

Optionally the retaining means comprises an L-shaped portion.

Optionally the retaining means comprises a J-shaped portion.

Optionally the retaining means comprises a bridge portion.

Optionally the first leg is connected to the second leg via the bridge portion. Optionally the retaining means comprises an attachment portion.

Optionally the retaining means comprises an engagement portion.

Optionally the L-shaped portion is connected to the J-shaped portion via the bridge portion.

Optionally the retaining means comprises an L-shaped portion, a J-shaped portion and a bridge portion, wherein the L-shaped portion is connected to the J-shaped portion via the bridge portion.

Optionally the retaining means is biased towards the open position by the resilience of the bridge portion.

Optionally the retaining means is a resilient retaining means.

Optionally the retaining means is a metal or plastic retaining means.

Optionally the tool is movable between a storage configuration and an in-use configuration.

Optionally in the storage configuration the retaining means is in the closed position

Optionally in the in-use configuration the retaining means is in the open position.

Optionally the second shear part is rotatably connected to the first shear part via a pivot means.

Optionally each of the first shear part and the second shear part comprises a blade.

Optionally the cutting tool is a garden cutting tool.

Optionally the cutting tool is a pair of shears such as hedge shears or lawn shears, a pair of scissors, loppers or secateurs.

### Brief description of the drawings

The invention will be described by way of example only referring to the figures, in which:
Figure 1 shows a perspective view of a cutting tool according to an aspect of the invention.
Figure 2 shows front and rear perspective views of the cutting tool of figure 1 in a storage configuration.
Figure 3 shows front and rear perspective views of the cutting tool of figure 1 in an in-use configuration.
Figure 4 shows side, front and top views of a retaining member or clip according to an aspect of the invention in a non-tensioned state.
Figure 5 shows further side, front and top views of the retaining member or clip of figure 4 in a tensioned state.
Figure 6 shows front views of the cutting tool of figure 1 moving between the storage configuration and the in-use configuration.
Figure 7 shows rear views of the cutting tool of figure 1 moving between the storage configuration and the in-use configuration.
Figure 8 shows side views of the cutting tool of figure 1 moving between the storage configuration and the in-use configuration.
Figure 9 shows further side views of the cutting tool of figure 1 moving between the storage configuration and the in-use configuration.
Figure 10 shows front views of a further cutting tool according to an aspect of the invention moving between a storage configuration and an in-use configuration.
Figure 11 shows rear views of the cutting tool of figure 10 moving between the storage configuration and the in-use configuration.
Figure 12 shows side views of the cutting tool of figure 10 moving between the storage configuration and the in-use configuration.
Figure 13 shows further side views of the cutting tool of figure 10 moving between the storage configuration and the in-use configuration.

### Detailed description

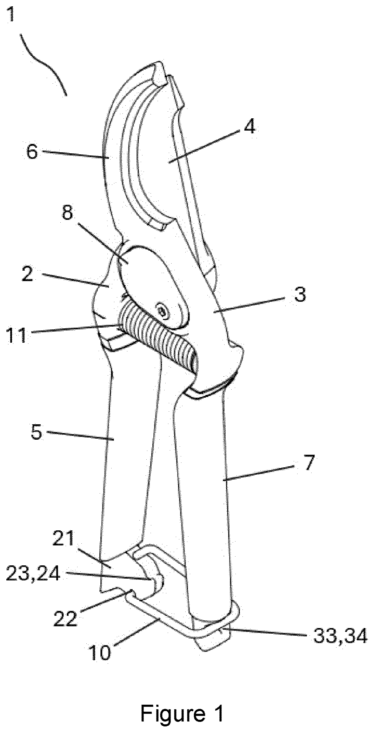

Figures 1 to 3 illustrate a cutting tool 1 according to an aspect of the present invention. The cutting tool 1 is in the form of a garden cutting tool, in this case secateurs. The cutting tool 1 comprises a first shear part 2 and a second shear part 3. The first shear part 2 comprises a blade portion 4 and a handle section 5. Likewise, the second shear part 3 comprises a blade portion 6 and a handle section 7. The cutting tool 1 comprises a spring 11 attached to both of the first and second shear parts 2, 3. Each blade portion 4, 6 provides a cutting blade for cutting and/or pruning branches, plants and the like. The handle sections 5, 7 allow a user to grip the cutting tool 1 and operate the blade portions 4, 6.

In use, the first shear part 2 and second shear part 3 are able to rotate with respect to each other. The first and second shear parts 2, 3 are configured to rotate around a pivot mechanism 8. The first and second shear parts 2, 3 are rotatably held together by the pivot mechanism 8. The spring 11 is attached to both of the first and second shear parts 2, 3 such that the handles 5, 7 of the cutting tool 1 are 'pushed apart' i.e. biased towards a separated position. As will be appreciated, the blade portions 4, 6 are also biased towards a separated position by the spring 11.

The cutting tool 1 comprises a retaining member or clip 10 attached to the first shear part 2. As will be explained in further detail below, the retaining member or clip 10 can be used to engage the second shear part 3 allowing the cutting tool 1 to be stored safely. Furthermore, the retaining member or clip 10 is biased towards an open position in which it is located away from the second shear part 3. In the open position, the clip 10 does not interrupt the operation of the cutting tool 1, and in use does not prevent movement of the first shear part 2 with respect to the second shear part 3.

The spring 11 comprises a coiled spring or a leaf spring. The spring 11 is locatable between the first shear part 2 and the second shear part 3. In particular, the spring 11 is attached to the first shear part 2 and the second shear part 3. The spring 11 is configured for separating the handles of the first and second shear parts 2, 3. As is explained in further detail below, the spring 11 is configured for pushing a part of the second shear part 2 towards the retaining member or clip 10. In particular, the spring 11 is configured for pushing a stopper 33 of the second shear part 2 into engagement with a bridge portion 130 of the retaining member or clip 10, to hold the retaining member or clip 10 in its closed position.

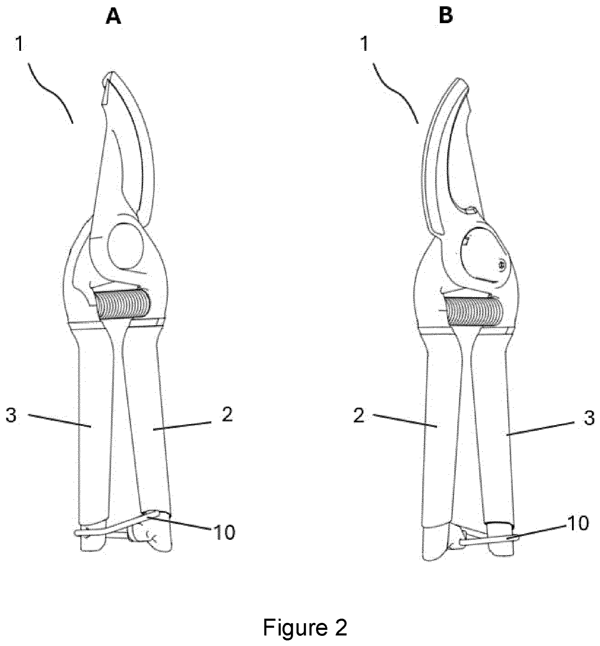

The cutting tool 1 has a storage configuration, shown in figures 1 and 2, in which the retaining member or clip 10 engages the second shear part 3. The retaining member or clip 10 is configured to retain the handles so they don't spring open during storage. In the storage configuration, the retaining member or clip 10 is in a closed position. In the closed position, the retaining member or clip 10 passes over the second shear part 3 such that the distance between the first and second shear parts 2, 3 is defined by the size of the retaining member or clip 10. As noted above, the handle sections 5, 7 are biased towards a separated position by the spring 11. In the storage configuration, the separation of the handle sections 5, 7 is limited by the retaining member or clip 10.

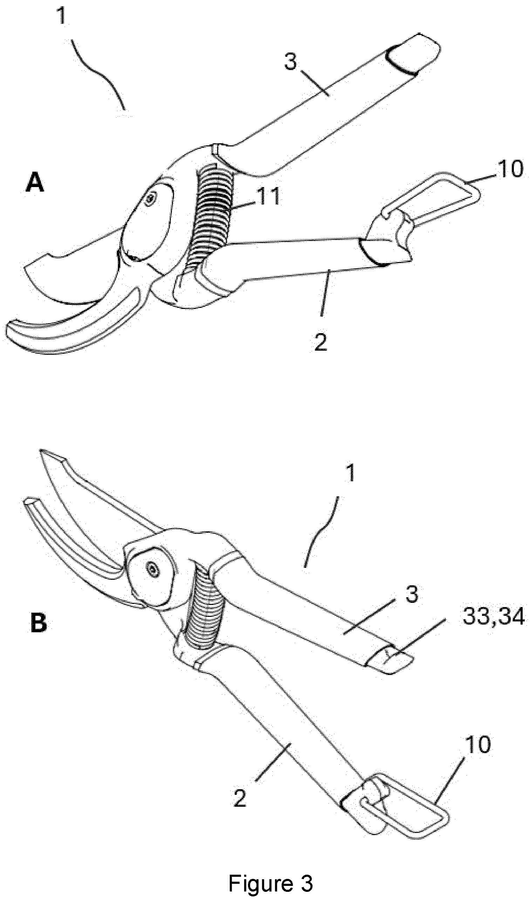

The cutting tool 1 has an in-use configuration, shown in figure 3, in which the retaining member or clip 10 does not engage the second shear part 3. In the in-use configuration, the retaining member or clip 10 is in an open position. In the open position, the retaining member or clip 10 does not pass over the second shear part 3. In the in-use configuration the separation of the handle sections 5, 7 is not limited by the retaining member or clip 10.

The retaining member or clip 10 can be located in the closed position (figures 1 and 2) but is biased towards the open position (figure 3). In the open position, the retaining member or clip 10 does not engage the second shear part 3. The retaining member or clip 10 can be used to engage the second shear part 3 so that the cutting tool can be stored safely, but is biased towards a position in which it does not interrupt operation of the cutting tool 1. In particular, the retaining member or clip 10 is biased towards a position in which it cannot interrupt or prevent movement of the second shear part 3 with respect to the first shear part 2.

The retaining member or clip 10 is rotatably connected to the first shear part 2. The retaining member or clip 10 is rotatably connected to the handle 5 of the first shear part 2. The first shear part 2 comprises a connection arrangement 21 for connecting the retaining member or clip 10 to the first shear part 2. The connection arrangement 21 comprises a hole or aperture 22 for receiving at least a part of the retaining member or clip 10.

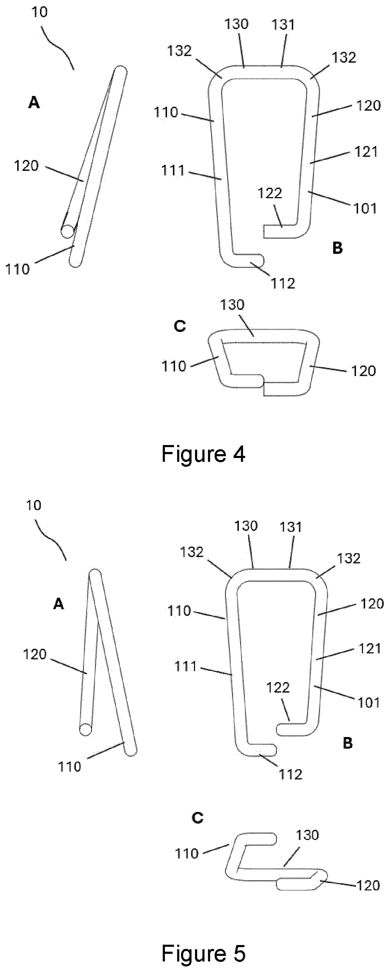

Figures 4 and 5 illustrate a retaining member or clip 10 for a cutting tool according to an aspect of the present invention. In particular, figures 4 and 5 illustrate in detail the retaining member or clip 10 of the cutting tool 1. The retaining member or clip 10 is resilient and can be attached or retrofitted to a suitable cutting tool. Figure 4 shows the retaining member or clip 10 in a low-tension or non-tensioned configuration and figure 5 shows the retaining member or clip 10 in a tensioned configuration.

The retaining member or clip 10 is curved. The retaining member or clip 10 comprises an open loop 101, for example an open loop of wire. In preferred embodiments, the retaining member or clip 10 is a metal or plastic retaining member or clip 10. For example, the retaining member or clip 10 may be made from mild steel.

As shown in e.g. panel B of figure 4, the retaining member or clip 10 comprises a first leg 110, a second leg 120 and a bridge portion 130. The first leg 110 is L-shaped and the second leg 120 is J-shaped. The first leg 110 comprises a straight portion 111 and an attachment portion 112. The second leg 120 comprises a straight portion 121 and an engagement portion 122. The first leg 102 is connected to the second leg 104 via the bridge portion 130. The bridge portion 130 comprises a straight portion 131 between two corner portions 132. In other embodiments, other shapes may be used for the first leg 110, second leg 120 and bridge portion 130. For example, each straight portion 111, 121, 131 may be curved. The area enclosed by the first leg 110, second leg 120 and bridge portion 130 is large enough to receive a part of the second shear part 3, particularly a distal end thereof.

In the low-tension or non-tensioned configuration shown as figure 4, the distance between the first leg 110 and second leg 120 (panel A) is a default distance, and there is no twist in the bridge portion 130. In the tensioned configuration shown as figure 5, the distance between the first leg 110 and second leg 120 (panel A) is increased, and the bridge portion 130 is twisted.

The retaining member or clip 10 comprises an attachment portion 112. In use, the attachment portion 112 is located in the hole or aperture 22 of the connection arrangement 21 of the first shear part 2. In use, the retaining member or clip 10 is able to rotate about the attachment portion 122/hole or aperture 22.

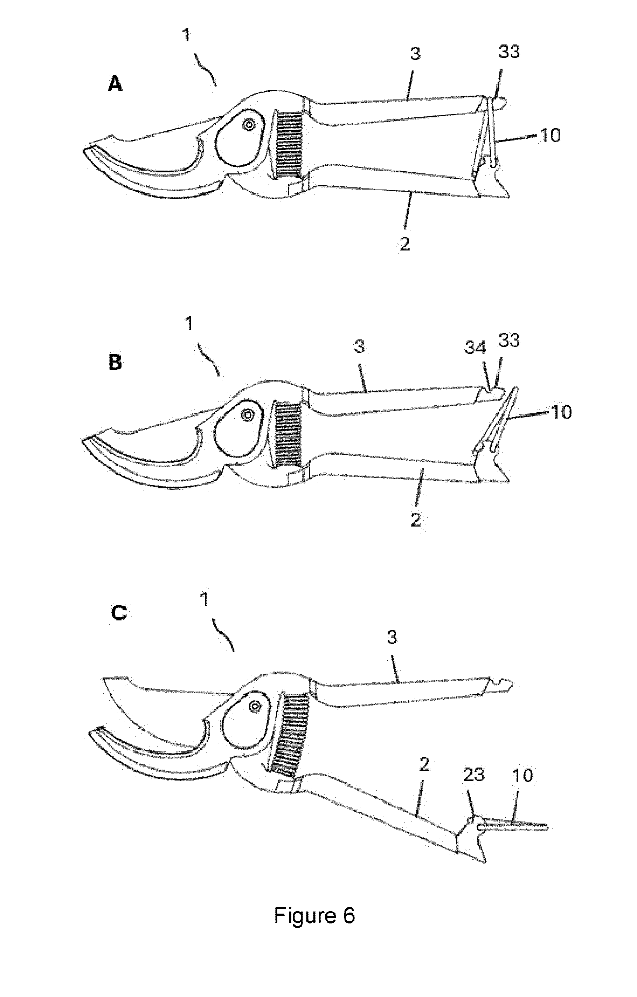

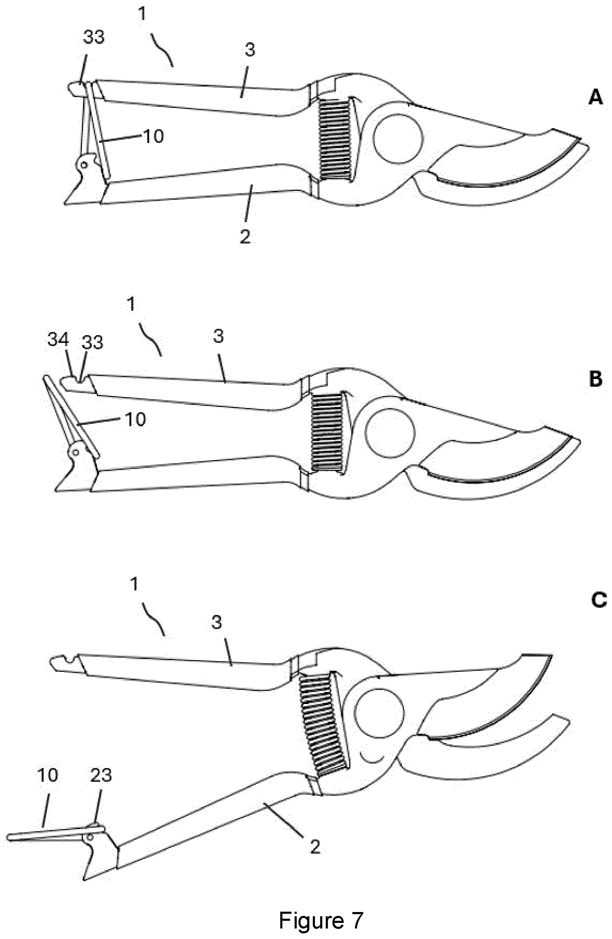

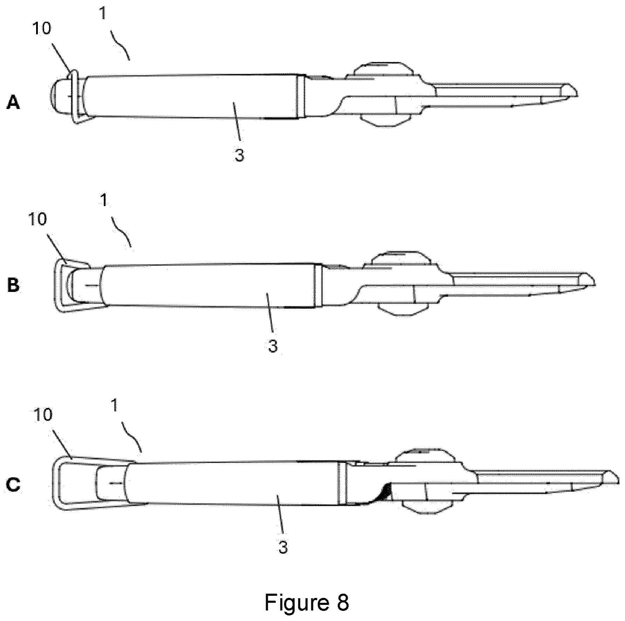

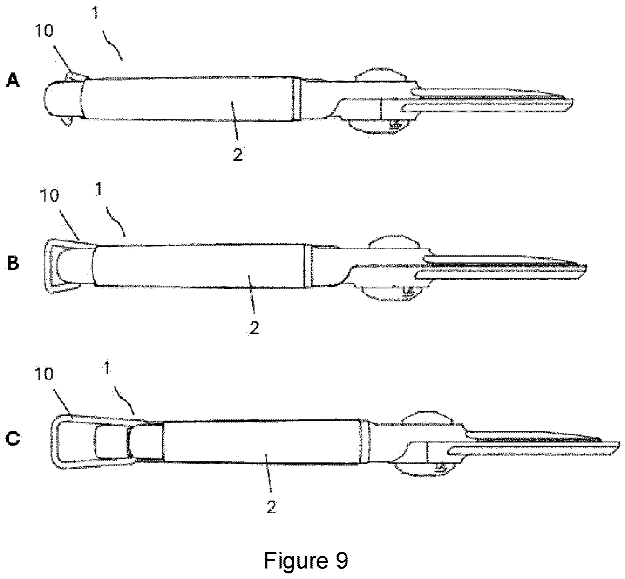

As shown in figures 6-9, the retaining member or clip 10, when attached to the other components of the cutting tool 1, is movable (in this case rotatable) between the open position and the closed position. For example, figure 6, panel A shows the retaining member or clip 10 in the closed position. Figure 6, panel B shows the retaining member or clip 10 in an intermediate position between the open position and the closed position. Figure 6, panel C shows the retaining member or clip 10 in the open position. To reach the closed position from the open position (and vice versa), the retaining member or clip 10 is rotated about the connection arrangement 21, and in this example about the hole or aperture 22.

The retaining member or clip 10 comprises an engagement portion 122. In use, the engagement portion 122 engages an inner surface of the connection arrangement 21. In use, the engagement portion 122 is in contact with the inner surface of the connection arrangement 21. As shown in figure 6, the width of the connection arrangement 21 varies. This variance in the width of the connection arrangement 21 causes retaining member or clip 10 to be biased into the open position. The retaining member or clip 10 is biased towards the open position by the resilience of the retaining member or clip 10, and in particular the resilience of the bridge portion 130.

Figure 6, panel A shows the retaining member or clip 10 in the closed position. In this closed position, the first and second legs 110, 120 of the retaining member or clip 10 are pushed apart by the connection arrangement 21, since the width of the connection arrangement 21 (i.e. that part of the connection arrangement 21 that is located between the attachment portion 112 and the engagement portion 122) is greater than the default distance between the attachment portion 112 and the engagement portion 122. This causes the bridge portion 130 to twist and may cause some bending of the first and second legs 110, 120. In this position (analogous to the position shown in figure 5) there is tension in the retaining member or clip 10, the tension being caused by the width of the connection arrangement 21 and the position of the retaining member or clip 10.

The second shear part 3 comprises a stopper 33. The stopper 33 of the second shear part 3 comprises an engagement surface 34 for engaging at least a part of the retaining member or clip 10. In particular, the stopper 33 of the second shear part 3 comprises an engagement surface 34 for engaging the bridge portion 130 of the retaining member or clip 10. The stopper 33 of the second shear part 3 is attached to the handle 7 of the second shear part 3. In some embodiments, the stopper 33 of the second shear part 3 is integrally formed with the handle 7 of the second shear part 3.

In the closed position shown in panel A of figure 6 the bridge portion 130 of the retaining member or clip 10 engages the stopper 33 of the second shear part 3. The stopper 33 of the second shear part 3 limits the movement of the retaining member or clip 10 with respect to the second shear part 3. The stopper 33 of the second shear part 3 prevents movement (rotation) of the retaining member or clip 10 away from the second shear part 3. The tension in the retaining member or clip 10, due to the deformation caused by the width of the connection arrangement 21, creates a force which tends to rotate the retaining member or clip 10 away from the closed position. The stopper 33 of the second shear part 3 opposes this force and prevents such movement. The spring 11 tends to push the second shear part 3 towards the bridge portion 130 of the retaining member or clip 10, preventing the bridge portion 130 from being able to pass over the stopper 33.

Figure 6, panel B shows the retaining member or clip 10 in an intermediate position between the open position and the closed position. To reach the intermediate position from the closed position, a user squeezes the handle sections 5, 7 such that the distance between the connection arrangement 21 and stopper 33 is reduced and the bridge portion 103 can pass over the stopper 33. The benefit of this action is the user doesn't have to fiddle about with unhooking a catch but is ready to go just by giving the handles a squeeze.

In the intermediate position, the first and second legs 110, 120 of the retaining member or clip 10 are still pushed apart by the connection arrangement 21 such that there is tension in the retaining member or clip 10. The tension in the retaining member or clip 10 again creates a force which tends to rotate the retaining member or clip 10 towards the open position. Since the stopper 33 does not engage the bridge portion 130 in the intermediate position, there is nothing to prevent rotation of the retaining member or clip 10 towards the open position.

Figure 6, panel C shows the retaining member or clip 10 in the open position. In the open position, the cutting tool 1 is unlocked and ready to use. In this open position, the first and second legs 110, 120 of the retaining member or clip 10 are not pushed apart by the connection arrangement 21, since the width of the connection arrangement 21 between the first and second legs 110, 120 in this position is equal to the default distance between the attachment portion 112 and the engagement portion 122. In this position (analogous to the position shown in figure 4) there is little or no tension in the retaining member or clip 10.

The first shear part 2, particularly the connection arrangement 21, comprises a stopper 23. The stopper 23 of the first shear part 2 is configured to limit the movement of the retaining member or clip 10 with respect to the first shear part 2. The stopper 23 of the first shear part 2 is attached or adjacent to distal end of the handle 5 of the first shear part 2. The stopper 23 of the first shear part 2 is integrally formed with the connection arrangement 21. The stopper 23 of the first shear part 2 comprises an engagement surface 24 for engaging at least a part of the retaining member or clip 10. The retaining member or clip 10 comprises an engagement portion 122.

In the open position the retaining member or clip 10 engages the stopper 23 (see figure 6, panel C), whereas in the closed position (figure 6, panel A) and in the intermediate position (figure 6, panel B) the retaining member or clip 10 does not engage the stopper 23. In other words, in the open position the engagement portion 122 of the retaining member or clip 10 engages the engagement surface 24 of the stopper 23.

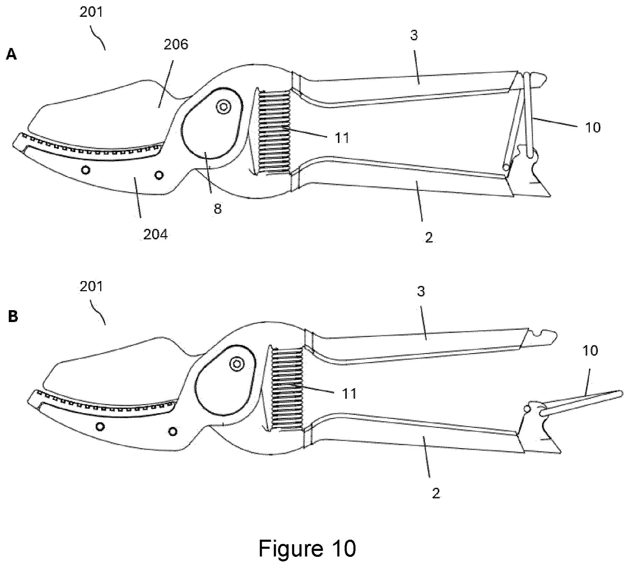

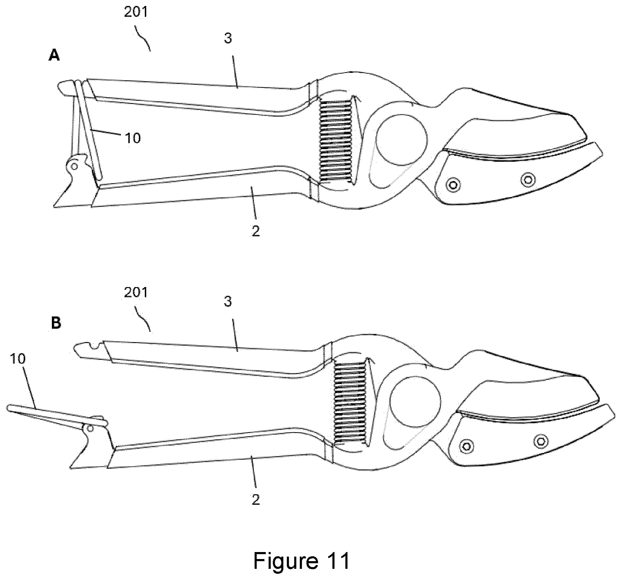

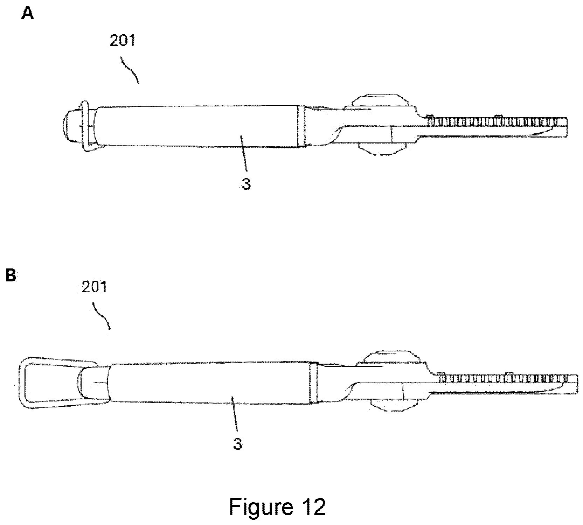

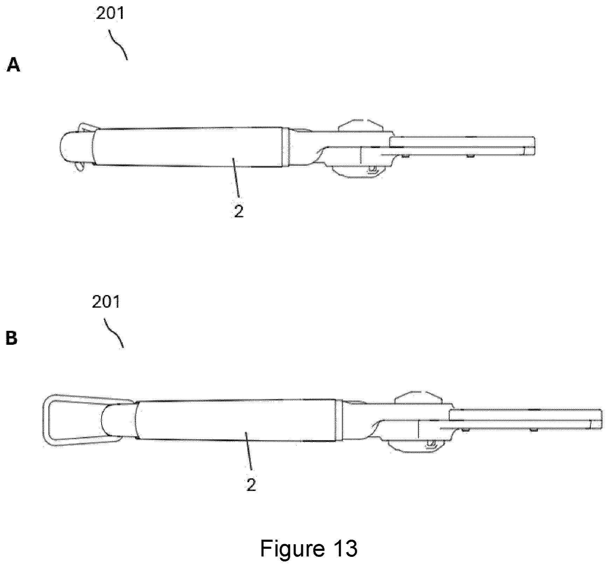

Figures 10 to 13 show an alternative embodiment of a cutting tool 200 according to an aspect of the invention. The cutting tool 200 of the second embodiment is similar to the cutting tool 1 of the first embodiment, with similar numerals denoting similar features. The cutting tool 200 of the second embodiment is distinguished by the shape and configuration of the blade portions 204, 206.

As will be understood by the skilled person, the example embodiments presented above can be modified in a number of ways without departing from the scope of the invention. For example, only one of the first shear part and the second shear part may comprises a blade. The cutting tool may be any suitable garden cutting tool, such as a pair of shears, hedge shears, lawn shears, a pair of scissors, loppers or secateurs.

The features disclosed in the foregoing description or the following drawings, expressed in their specific forms or in terms of a means for performing a disclosed function, or a method or a process of attaining the disclosed result, as appropriate, may separately, or in any combination of such features be utilised for realising the invention in diverse forms thereof.

## Claims

**1.** A cutting tool comprising:
a first shear part;
a second shear part rotatably connected to the first shear part; and
a retaining means movably connected to the first shear part,
wherein at least one of the first shear part and the second shear part comprises a blade,
wherein the cutting tool has a storage configuration in which the retaining means engages the second shear part, and
wherein the retaining means is biased towards an open position in which the retaining means does not engage the second shear part.

**2.** A cutting tool according to claim 1, wherein each of the first and second shear parts comprises a handle.

**3.** A cutting tool according to claim 2, wherein the cutting tool comprises a spring means locatable between the first shear part and the second shear part.

**4.** A cutting tool according to claim 3, wherein the cutting tool comprises a spring means configured for separating the handles of the first shear part and the second shear part.

**5.** A cutting tool according to any preceding claim, wherein the retaining means is rotatably connected to the first shear part.

**6.** A cutting tool according to any preceding claim, wherein the retaining means is movable between the open position and a closed position.

**7.** A cutting tool according to claim 6, wherein in the open position the retaining means engages a stopper of the first shear part.

**8.** A cutting tool according to claim 7, wherein the stopper of the first shear part limits the movement of the retaining means with respect to the first shear part.

**9.** A cutting tool according to any one of claims 6 to 8, wherein in the closed position the retaining means engages a stopper of the second shear part.

**11.** A cutting tool according to claim 9, wherein the stopper of the second shear part limits the movement of the retaining means with respect to the second shear part.

**12.** A cutting tool according to claim 10 or claim 11 wherein the stopper of the second shear part prevents movement of the retaining means away from the second shear part.

**13.** A cutting tool according to any preceding claim, wherein the retaining means is curved, and optionally comprises an open loop.

**14.** A cutting tool according to any preceding claim, wherein the retaining means comprises a first leg, a second leg and a bridge portion, wherein first leg is connected to the second leg by the bridge portion.

**15.** A cutting tool according to any preceding claim, wherein the cutting tool is a pair of shears such as hedge shears or lawn shears, a pair of scissors, loppers or secateurs.
